# FASCICULE DE BREVET EUROPEEN

(11) **EP 1 313 191 B1**
(45) Date de publication et mention de la délivrance du brevet: **30.09.2015**
(21) Numéro de dépôt: 02292764.4
(22) Date de dépôt: 06.11.2002
(51) Int. Cl.: H02G 3/06

(54) **Accessoire pour goulotte comportant des moyens de collage sur un tronçon de couvercle**
Zusatz für Kabelrinnen mit Klebmitteln fur Verbindung auf einem Deckelsabschnitt
Accessory for ducts with adhesive means for fastening on a cover section

(30) Priorité: 15.11.2001 FR 0114786
(43) Date de publication de la demande: 21.05.2003
(73) Titulaire: Legrand France, 87000 Limoges (FR); Legrand SNC, 87000 Limoges (FR)
(72) Inventeur: Bellanger, Jérôme, 72000 Le Mans (FR)
(74) Mandataire: Santarelli

(56) Documents cités:
- EP-A- 1 006 634
- FR-A- 2 638 581

## Description

La présente invention concerne un accessoire pour goulotte destiné à établir une continuité entre au moins deux tronçons de couvercle de goulotte aboutés, ledit accessoire présentant une face interne apte à recouvrir partiellement les deux tronçons de couvercle.

Il faut comprendre ici par le terme "tronçons de couvercle" toutes parties de goulotte détachables aboutées une fois que les tronçons de goulotte sont fixés sur une paroi. En général, il s'agit du couvercle de fermeture du socle de goulotte mais il peut également s'agir des ailes latérales de ce socle lorsqu'il est question de goulottes dites composables dont les ailes latérales sont rapportées par encliquetage sur les fonds des socles fixés à la paroi.

Concernant l'accessoire selon l'invention, il peut s'agir d'un accessoire de jonction qui établit une jonction entre deux tronçons de couvercle s'étendant dans le prolongement l'un de l'autre, ou d'un accessoire d'angle ou de dérivation qui permet de raccorder deux voire trois tronçons de couvercle présentant des orientations différentes dans un même plan ou dans des plans différents.

Classiquement, de tels accessoires sont rapportés par vissage ou encliquetage sur les socles de goulotte aboutés.

On connaît également du document EP 1 006 634 un accessoire d'angle qui comprend deux parties articulées l'une par rapport à l'autre, chacune des deux parties comportant, sur sa face interne, des bandes autoadhésives permettant de fixer ledit accessoire par collage sur les deux socles de goulotte aboutés de sorte qu'il recouvre les ailes latérales desdits socles ainsi qu'une partie des couvercles de fermeture de ceux-ci.

Le principal inconvénient des accessoires précités déjà connus est qu'ils ne peuvent pas être facilement démontés et repositionnés sur lesdits socles afin d'intervenir à l'intérieur de ceux-ci pour permettre par exemple l'ajout d'un câble ou d'un appareillage ou simplement de réaliser une opération de vérification ou de maintenance.

Afin de remédier à cet inconvénient, la présente invention propose un accessoire tel que défini en introduction, caractérisé en ce que ladite face interne est subdivisée en au moins deux zones, à savoir au moins une première zone pourvue d'une matière adhésive, apte à s'appliquer contre un desdits tronçons de couvercle, et une deuxième zone complètement exempte de matière adhésive, apte à s'appliquer contre l'autre au moins desdits tronçons de couvercle, de sorte que ledit accessoire est apte à être fixé par collage uniquement sur un des deux tronçons de couvercle.

D'autres caractéristiques non limitatives et avantageuses de l'accessoire selon l'invention sont les suivantes :
- lesdites première et deuxième zones présentent des surfaces identiques ;
- ladite première zone présente une surface inférieure à celle de ladite deuxième zone ;
- ladite première zone présente une surface supérieure à celle de ladite deuxième zone ;
- ladite première zone est située en retrait par rapport à ladite deuxième zone ;
- ladite matière adhésive recouvre toute la surface de ladite première zone ;
- ladite matière adhésive recouvre une partie de la surface de ladite première zone ;
- il comporte au moins une ligne de pliage transversale ;
- il comporte au moins une ligne de découpe ou de cassure transversale ;
- ladite matière adhésive est recouverte d'un film de protection avant l'utilisation dudit accessoire ;
- ladite matière adhésive est un film de colle appliqué sur ladite première zone ;
- ladite matière adhésive est une série de points de colle répartis sur ladite première zone ; et
- ladite matière adhésive est une bande autoadhésive.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1A est une vue schématique en perspective d'un premier mode de réalisation de l'accessoire selon l'invention ;
- la figure 1B est une vue schématique arrière en perspective d'un tronçon de goulotte dont le couvercle est muni à une extrémité de l'accessoire de la figure 1A ;
- la figure 1C est une vue en perspective de dessus de deux tronçons de goulotte aboutés, comportant à leur jonction l'accessoire de la figure 1A ;
- la figure 2A est une vue en perspective d'un deuxième mode de réalisation de l'accessoire selon l'invention ;
- la figure 2B est une vue en perspective d'un tronçon de goulotte pourvu à une extrémité de l'accessoire de la figure 2A ;
- la figure 2C est une vue en perspective de deux tronçons de goulotte aboutés selon un angle rentrant, comportant à leur jonction l'accessoire de la figure 2A ;
- la figure 3A est une vue schématique arrière en perspective d'un troisième mode de réalisation de l'accessoire selon l'invention ;
- la figure 3B est une vue en perspective d'un tronçon de goulotte pourvu à une extrémité de l'accessoire de la figure 3A ;
- la figure 3C est une vue en perspective de deux tronçons de goulotte aboutés selon un angle plat et comprenant à leur jonction l'accessoire de la figure 3A ;
- la figure 4 est une vue schématique en perspective, du côté de sa face interne, d'un quatrième mode de réalisation de l'accessoire selon l'invention ;
- la figure 5 est une vue schématique en perspective d'une variante de réalisation de l'accessoire représenté sur la figure 1A ; et
- la figure 6 est une vue schématique en perspective d'une autre variante de réalisation de l'accessoire représenté sur la figure 1A.

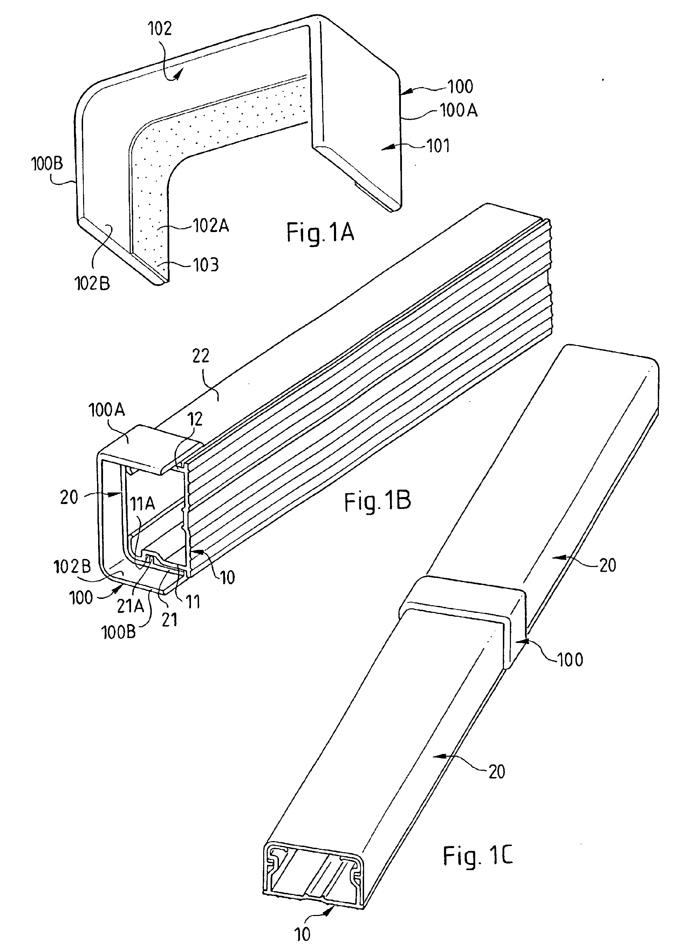

Sur la figure 1A, on a représenté un accessoire 100 pour goulotte destiné à établir une continuité entre au moins deux tronçons de couvercle 20 de tronçons de goulotte aboutés (voir figure 1C).

Ici, cet accessoire 100 est un accessoire de jonction qui permet d'établir la continuité entre au moins deux tronçons de couvercle 20 de goulotte s'étendant dans le prolongement l'un de l'autre.

En particulier, l'accessoire 100 permet d'établir une étanchéité au niveau des bords d'extrémité coupés, juxtaposés des tronçons de couvercle 20 aboutés, sans altérer l'esthétique de l'ensemble.

Ainsi, il épouse la forme externe des tronçons de couvercle 20 qui, ici, présentent chacun une section en U avec des bords tombants 21, 22 qui recouvrent les ailes latérales des socles 10 de goulotte.

L'accessoire 100 présente également une forme globalement en U avec deux ailes latérales 100A, 100B destinées à recouvrir les extrémités coupées, juxtaposées des bords tombants 21, 22 des tronçons de couvercle 20 aboutés.

Il est à préciser que, selon l'exemple représenté sur les figures, et de manière connue en soi, chaque tronçon de goulotte comporte un socle 10 présentant une section transversale globalement en U avec deux ailes latérales 11, 12 pourvues chacune, sur leur face externe, d'une gorge longitudinale 11A, 12A dans laquelle vient s'encliqueter une nervure longitudinale 21A, 22A prévue sur la face interne d'un bord tombant 21, 22 d'un tronçon de couvercle 20 fermant ledit socle 10.

L'accessoire 100 présente une face externe 101 et une face interne 102 apte à recouvrir partiellement les faces externes des deux tronçons de couvercle 20 aboutés.

Avantageusement, la face interne 102 de l'accessoire 100 est subdivisée en deux zones 102A, 102B dans le sens transversal par rapport à la direction longitudinale des tronçons de couvercle 20 aboutés.

La première zone 102A est destinée à s'appliquer contre un des tronçons de couvercle 20 et la deuxième zone 102B est destinée à s'appliquer contre l'autre socle de tronçon de couvercle 20.

La première zone 102A est avantageusement pourvue d'une matière adhésive 103 et la deuxième zone 102B est complètement exempte d'une telle matière adhésive.

Ainsi, l'accessoire 100 est apte à être fixé par collage uniquement sur un des deux tronçons de couvercle 20 (voir figure 1B) par application de sa première zone 102A contre la face externe du tronçon de couvercle 20 correspondant.

Comme le montre la figure 1B, lorsque l'accessoire 100 est collé sur la face externe du tronçon de couvercle 20 correspondant, il forme avec celui-ci un ensemble monobloc pouvant être monté et démonté sur le socle 10 du tronçon de goulotte correspondant.

La jonction des tronçons de goulotte telle que représenté sur la figure 1C est réalisée de la manière suivante.

Tout d'abord, les socles 10 des tronçons de goulotte sont juxtaposés, et le tronçon de couvercle 20 ne portant pas l'accessoire 100 est encliqueté sur un desdits socles 10 de goulotte. L'accessoire 100 est solidarisé par collage au bord d'extrémité coupé de l'autre tronçon de couvercle 20, de sorte qu'une partie de l'accessoire 100 est en porte à faux (voir figure 1B), et l'ensemble constitué par le tronçon de couvercle 20 portant par collage l'accessoire 100 est encliqueté sur l'autre desdits socles 10 de goulotte de manière que ladite partie en porte à faux de l'accessoire 100 vienne recouvrir le bord d'extrémité coupé du premier tronçon de couvercle 20 positionné sur le socle 10 de goulotte correspondant.

Avantageusement, lors d'une opération de maintenance ultérieure, on peut dégager facilement les tronçons de couvercle 20 sans avoir à démonter préalablement l'accessoire 100 et intervenir ainsi à l'intérieur d'un ou des deux socles 10 de goulotte.

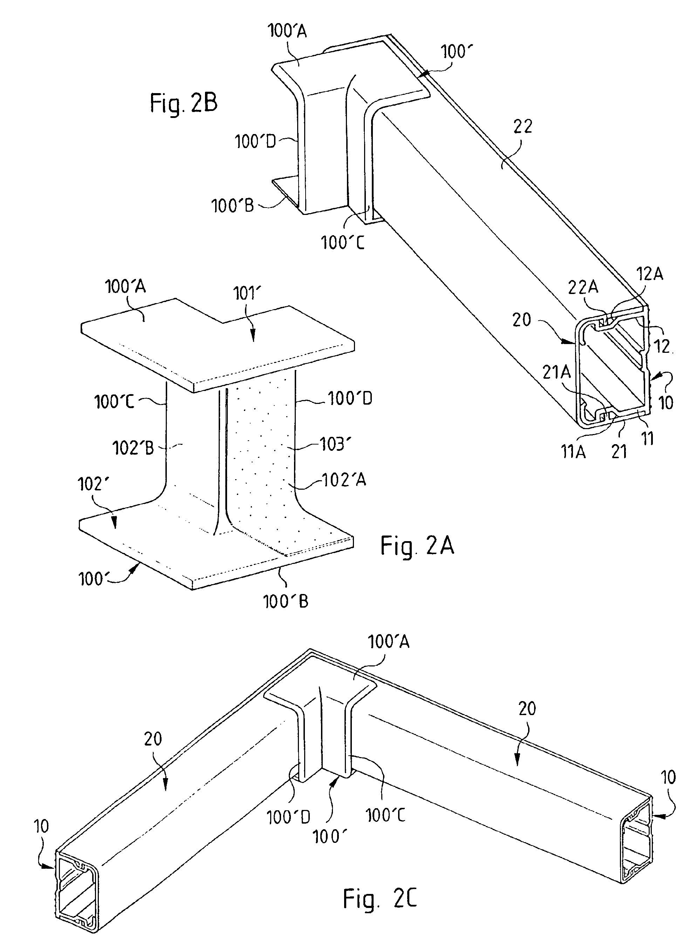

Sur la figure 2A, on a représenté un autre accessoire 100' du même type que l'accessoire 100, qui est ici un accessoire d'angle rentrant permettant d'établir une jonction en angle entre deux tronçons de couvercle 20 positionnés sur des socles 10 aboutés pour former un angle rentrant, tel que cela est représenté sur la figure 2C.

L'accessoire 100' comporte deux platines 100'A, 100'B, chacune présentant une forme en L, raccordées entre elles par des parois 100'C, 100'D formant l'angle rentrant correspondant.

L'accessoire 100' est préférentiellement une pièce monobloc.

L'accessoire 100' comporte également une face externe 101' et une face interne 102' apte à recouvrir partiellement les deux tronçons de couvercle 20. La face interne 102' est subdivisée en deux zones 102'A, 102'B, la première zone 102'A s'étendant selon l'une des directions de l'accessoire et la deuxième zone 102'B s'étendant selon l'autre direction de l'accessoire 100'.

La première zone 102'A est pourvue d'une matière adhésive 103' et est destinée à s'appliquer contre la face externe d'un desdits tronçons de couvercle 20 alors que la deuxième zone 102'B est complètement exempte de matière adhésive et est apte à s'appliquer contre la face externe de l'autre tronçon de couvercle 20 de sorte que, tout comme l'accessoire 100, l'accessoire 100' est apte à être fixé par collage uniquement sur un des deux tronçons de couvercle 20 (voir figure 2B).

Les tronçons de goulotte représentés sur les figures 2B et 2C sont identiques à ceux représentés sur les figures 1B et 1C et ne seront pas décrits dans le détail.

L'accessoire 100' présente les mêmes avantages que l'accessoire 100, et sa mise en place à la jonction en angle des deux tronçons de goulotte est similaire à celle de l'accessoire 100, comme cela vient d'être décrit (voir figure 2C).

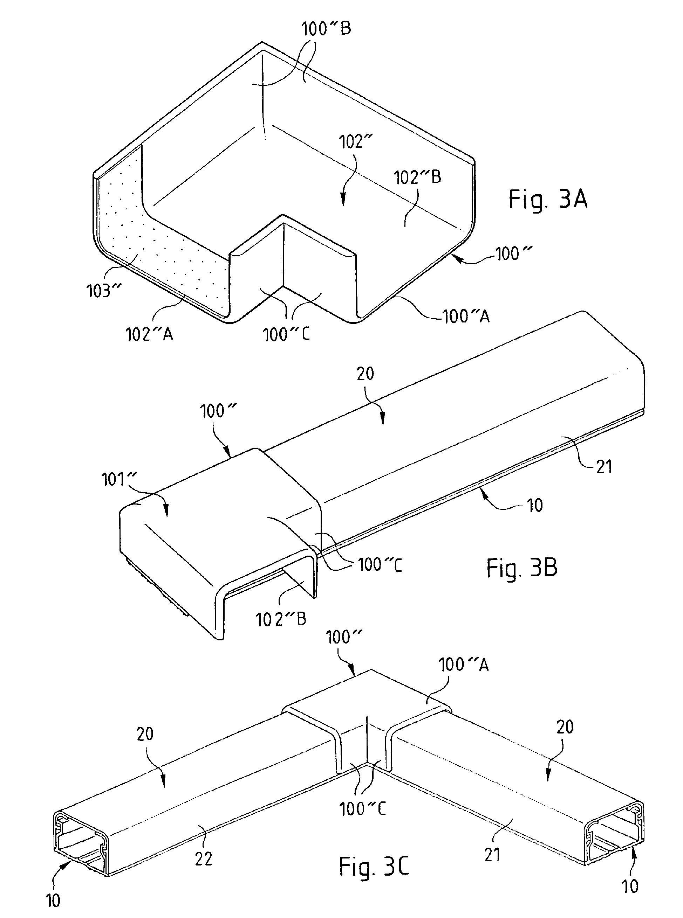

Sur la figure 3A, on a représenté un accessoire 100" du même type que les accessoires 100 et 100' décrits précédemment, qui est un accessoire d'angle plat permettant de faire la jonction entre deux tronçons de couvercle 20 de tronçons de goulotte aboutés formant un angle plat (voir figure 3C).

Cet accessoire 100" a une configuration en angle plat, avec une platine 100"A présentant une forme en L bordée, d'une part, à l'extérieur, par deux parois 100"B formant un angle externe et, d'autre part, à l'intérieur, par deux parois 100"C formant un angle interne.

Cet accessoire 100" comporte une face externe 101" et une face interne 102" destinée à recouvrir partiellement les deux tronçons de couvercle 20 aboutés en angle (voir figure 3C).

La face interne 102" de l'accessoire 100" est subdivisée en deux zones, à savoir une première zone 102"A destinée à s'appliquer sur la face externe d'un des tronçons de couvercle 20 et une deuxième zone 102"B destinée à s'appliquer contre la face externe de l'autre tronçon de couvercle 20.

Ici, une partie seulement de la première zone 102"A est recouverte d'une matière adhésive 103" qui est répartie sur une bande de profil en U.

Tout comme les accessoires 100 et 100', l'accessoire 100" solidarisé par collage au bord d'extrémité coupé de l'un des tronçons de couvercle 20 est mis en place sur le bord d'extrémité coupé de l'autre tronçon de couvercle 20 par encliquetage du tronçon de couvercle correspondant sur le socle 10 de goulotte.

Les avantages de l'accessoire 100' sont identiques à ceux de l'accessoire 100 décrit précédemment.

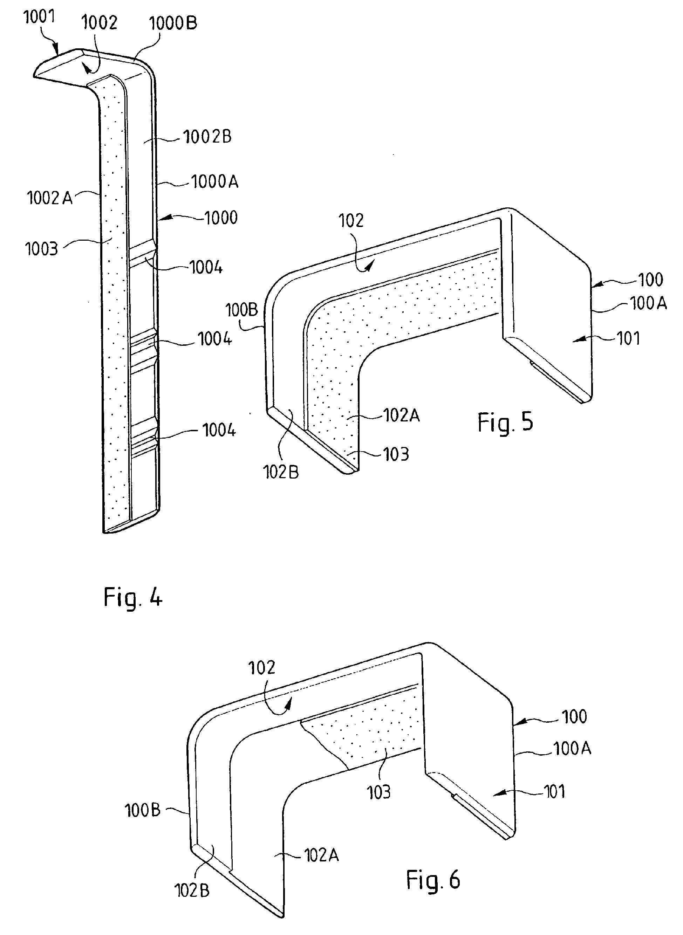

Sur la figure 4, on a représenté un autre accessoire 1000 du même type que les accessoires 100, 100' et 100", qui est ici également un accessoire de jonction permettant d'établir une continuité entre deux tronçons de couvercle de goulotte aboutés selon une même direction.

Cet accessoire 1000 se présente sous la forme d'une bande 1000A avec, à une extrémité, un bord tombant 1000B. Le bord tombant 1000B peut être formé par pliage d'une extrémité de la bande constituant l'accessoire 1000 selon une ligne de pliage non référencée.

Le bord tombant 1000B permet de couvrir la jonction entre deux bords d'ailes latérales des tronçons de couvercle aboutés.

On peut également prévoir que cet accessoire 1000 comporte deux lignes de pliage à chaque extrémité pour constituer à la demande des bords tombants destinés à recouvrir des parties d'ailes latérales de tronçons de couvercle aboutés.

L'accessoire 1000 présente une face externe 1001 et une face interne 1002 apte à recouvrir partiellement les faces externes des tronçons de couvercle aboutés.

L'accessoire 1000 comporte, sur sa face interne 1002, des lignes de découpe ou de cassure 1004 permettant d'ajuster sa longueur à la largeur des tronçons de couvercle qu'il doit recouvrir partiellement.

En outre, la face interne 1002 de l'accessoire 1000, tout comme les accessoires 100 ; 100' ; 100" décrits précédemment, est subdivisée en deux zones 1002A, 1002B dans le sens de sa longueur, à savoir une première zone 1002A revêtue d'une matière adhésive 1003 et destinée à s'appliquer contre la face externe d'un des tronçons de couvercle aboutés et une deuxième zone 1002B exempte de matière adhésive et destinée à s'appliquer contre la face externe de l'autre des tronçons de couvercle aboutés.

La matière adhésive 103 ; 103' ; 103" ; 1003, qui recouvre toute la surface ou seulement une partie de la surface de la première zone de la face interne des différents accessoires 100 ; 100' ; 100" ; 1000 décrits précédemment, peut être recouverte d'un film de protection non représenté avant l'utilisation de l'accessoire correspondant.

Cette matière adhésive 103 ; 103' ; 103" ; 1003 peut être un film de colle appliqué sur ladite première zone correspondante ou une bande autocollante ou autoadhésive. On peut également prévoir que la matière adhésive soit constituée par des touches ou points de colle répartis régulièrement sur la première zone correspondante de la face interne de l'accessoire en question.

Les figures 5 et 6 représentent deux variantes de l'accessoire 100 de la figure 1.

Selon la variante représentée sur la figure 5, ladite première zone 102A pourvue d'une matière adhésive 103 présente une surface supérieure à celle de ladite deuxième zone 102B qui en est exempte. Ainsi, cela permet de renforcer la solidarisation par collage de l'accessoire 100 au tronçon de couvercle concerné.

Selon la variante représentée sur la figure 6, ladite première zone 102A destinée à recevoir une matière adhésive 103 est située en retrait par rapport à ladite deuxième zone 102B de sorte qu'il existe une marche à la jonction desdites première et deuxième zones 102A, 102B de la face interne 102 de l'accessoire 100.

Cela permet, lors de la solidarisation par collage de l'accessoire 100 au tronçon de couvercle concerné, de mieux comprimer ladite matière adhésive 103 recouvrant ladite première zone 102A et de diminuer le jeu existant entre l'accessoire 100 et lesdits tronçons de couvercle.

## Revendications

1. Accessoire (100 ; 100' ; 100" ; 1000) pour goulotte destiné à établir une continuité entre au moins deux tronçons de couvercle (20) de goulotte aboutés, ledit accessoire (100 ; 100' ; 100" ; 1000) présentant une face interne (102 ; 102'; 102" ; 1002) apte à recouvrir partiellement les deux tronçons de couvercle (20), **caractérisé en ce que** ladite face interne (102 ; 102' ; 102" ; 1002) est subdivisée en au moins deux zones (102A, 102B ; 102'A, 102'B ; 102"A, 102"B ; 1002A, 1002B), à savoir au moins une première zone (102A ; 102'A ; 102"A ; 1002A) pourvue d'une matière adhésive (103 ; 103' ; 103" ; 1003), apte à s'appliquer contre un desdits tronçons de couvercle (20), et une deuxième zone (102B ; 102'B ; 102"B ; 1002B) complètement exempte de matière adhésive, apte à s'appliquer contre l'autre au moins desdits tronçons de couvercle (20), de sorte que ledit accessoire (100 ; 100' ; 100" ; 1000) est apte à être fixé par collage uniquement sur un desdits tronçons de couvercle (20).

2. Accessoire selon la revendication 1, **caractérisé en ce que** lesdites première et deuxième zones (102A, 102B ; 102'A, 102'B ; 102"A, 102"B ; 1002A, 1002B) présentent des surfaces identiques.

3. Accessoire selon la revendication 1, **caractérisé en ce que** ladite première zone (102A ; 102'A ; 102"A ; 1002A) présente une surface inférieure à celle de ladite deuxième zone (102B ; 102'B ; 102"B ; 1002B).

4. Accessoire selon la revendication 1, **caractérisé en ce que** ladite première zone (102A) présente une surface supérieure à celle de ladite deuxième zone (102B).

5. Accessoire selon l'une des revendications 1 à 4, **caractérisé en ce que** ladite première zone (102A) est située en retrait par rapport à ladite deuxième zone (102B).

6. Accessoire selon l'une des revendications 1 à 5, **caractérisé en ce que** ladite matière adhésive (103 ; 103') recouvre toute la surface de ladite première zone (102A; 102'A).

7. Accessoire selon l'une des revendications 1 à 5, **caractérisé en ce que** ladite matière adhésive (103" ; 1003) recouvre une partie de la surface de ladite première zone (102"A ; 1002A).

8. Accessoire selon l'une des revendications 1 à 7, **caractérisé en ce qu'**il comporte au moins une ligne de pliage transversale.

9. Accessoire selon l'une des revendications 1 à 8, **caractérisé en ce qu'**il comporte au moins une ligne de découpe ou de cassure transversale.

10. Accessoire selon l'une des revendications 1 à 9, **caractérisé en ce que** ladite matière adhésive est recouverte d'un film de protection avant l'utilisation dudit accessoire.

11. Accessoire selon l'une des revendications 1 à 10, **caractérisé en ce que** ladite matière adhésive (103 ; 103' ; 103" ; 1003) est un film de colle appliqué sur ladite première zone (102A ; 102'A ; 102"A ; 1002A).

12. Accessoire selon l'une des revendications 1 à 10, **caractérisé en ce que** ladite matière adhésive est une série de points de colle répartis sur ladite première zone.

13. Accessoire selon l'une des revendications 1 à 10, **caractérisé en ce que** ladite matière adhésive est une bande autoadhésive.

## Patentansprüche

1. Zubehörteil (100; 100'; 100"; 1000) für einen Führungskanal zum Herstellen eines stetigen Verlaufs zwischen wenigstens zwei aneinanderstoßenden Deckelabschnitten (20) des Führungskanals, wobei das Zubehörteil (100; 100'; 100"; 1000) eine Innenseite (102; 102'; 102"; 1002) aufweist, die die beiden Deckelabschnitte (20) zum Teil zu bedecken vermag,
**dadurch gekennzeichnet, dass** die Innenseite (102; 102'; 102"; 1002) in wenigstens zwei Bereiche (102A, 102B; 102'A, 102'B; 102"A, 102"B; 1002A, 1002B) unterteilt ist, nämlich wenigstens einen mit einem Klebemittel (103; 103"; 103'; 1003) versehenen ersten Bereich (102A; 102'A; 102"A; 1002A), der gegen einen der Deckelabschnitte (20) gedrückt zu werden vermag, und einen vollständig klebemittelfreien zweiten Bereich (102B; 102'B; 102"B; 1002B), der gegen wenigstens den anderen Deckelabschnitt (20) gedrückt zu werden vermag, derart, dass das Zubehörteil (100; 100'; 100"; 1000) allein durch Kleben auf einem der Deckelabschnitte (20) befestigt zu werden vermag.

2. Zubehörteil nach Anspruch 1,
**dadurch gekennzeichnet, dass** der erste und zweite Bereich (102A, 102B; 102'A, 102'B; 102"A, 102"B; 1002A, 1002B) identische Oberflächen aufweisen.

3. Zubehörteil nach Anspruch 1,
**dadurch gekennzeichnet, dass** der erste Bereich (102A; 102'A; 102"A; 1002A) eine Oberfläche aufweist, die geringer liegt als die des zweiten Bereichs (102B; 102'B; 102"B; 1002B).

4. Zubehörteil nach Anspruch 1,
**dadurch gekennzeichnet, dass** der erste Bereich (102A) eine Oberfläche aufweist, die größer liegt als die des zweiten Bereichs (102B).

5. Zubehörteil nach einem der Ansprüche 1 bis 4,
**dadurch gekennzeichnet, dass** der erste Bereich (102A) bezüglich des zweiten Bereichs (102B) versetzt angeordnet ist.

6. Zubehörteil nach einem der Ansprüche 1 bis 5,
**dadurch gekennzeichnet, dass** das Klebemittel (103; 103') die gesamte Oberfläche des ersten Bereichs (102A; 102'A) bedeckt.

7. Zubehörteil nach einem der Ansprüche 1 bis 5,
**dadurch gekennzeichnet, dass** das Klebemittel (103"; 1003) einen Teil der Oberfläche des ersten Bereichs (102"A; 1002A) bedeckt

8. Zubehörteil nach einem der Ansprüche 1 bis 7,
**dadurch gekennzeichnet, dass** es wenigstens eine quer verlaufende Falzlinie aufweist.

9. Zubehörteil nach einem der Ansprüche 1 bis 8,
**dadurch gekennzeichnet, dass** es wenigstens eine quer verlaufende Schnitt- oder Bruchlinie aufweist.

10. Zubehörteil nach einem der Ansprüche 1 bis 9,
**dadurch gekennzeichnet, dass** das Klebemittel vor Verwendung des Zubehörteils mit einem Schutzfilm überzogen ist.

11. Zubehörteil nach einem der Ansprüche 1 bis 10,
**dadurch gekennzeichnet, dass** es sich bei dem Klebemittel (103; 103'; 103"; 1003) um einen auf den ersten Bereich (102A; 102'A; 102"A; 1002A) aufgebrachten Klebefilm handelt.

12. Zubehörteil nach einem der Ansprüche 1 bis 10,
**dadurch gekennzeichnet, dass** es sich bei dem Klebemittel um eine Reihe von Klebepunkten handelt, die über den ersten Bereich verteilt sind.

13. Zubehörteil nach einem der Ansprüche 1 bis 10,
**dadurch gekennzeichnet, dass** das Klebemittel ein selbsthaftendes Klebeband ist.

## Claims

1. Accessory (100; 100'; 100"; 1000) for a trunking which is intended to establish a continuation between at least two joined end to end trunking cover portions (20), said accessory (100; 100'; 100"; 1000) having an inner face (102; 102'; 102"; 1002) which is capable of covering the two cover portions (20) in part, **characterised in that** said inner face (102; 102'; 102"; 1002) is subdivided into at least two zones (102A, 102B; 102'A, 102'B; 102"A, 102"B; 1002A, 1002B), namely at least one first zone (102A; 102'A; 102"A; 1002A) which is provided with an adhesive material (103; 103'; 103"; 1003) and is capable of being applied against one of said cover portions (20), and a second zone (102B; 102'B; 102"B; 1002B) which is completely free of adhesive material and is capable of being applied against at least the other of said cover portions (20), in such a way that said accessory (100; 100'; 100"; 1000) is capable of being fixed by adhesion exclusively onto one of said cover portions (20).

2. Accessory according to claim 1, **characterised in that** said first and second zones (102A, 102B; 102'A, 102'B; 102"A, 102"B; 1002A, 1002B) have identical surface areas.

3. Accessory according to claim 1, **characterised in that** said first zone (102A; 102'A; 102"A; 1002A) has a smaller surface area than that of said second zone (102B; 102'B; 102"B; 1002B).

4. Accessory according to claim 1, **characterised in that** said first zone (102A) has a larger surface area than that of said second zone (102B).

5. Accessory according to any of claims 1 to 4, **characterised in that** said first zone (102A) is situated so as to be set back with respect to said second zone (102B).

6. Accessory according to any of claims 1 to 5, **characterised in that** said adhesive material (103; 103') covers all of the surface area of said first zone (102A; 102'A).

7. Accessory according to any of claims 1 to 5, **characterised in that** said adhesive material (103"; 1003) covers part of the surface area of said first zone (102"A; 1002A).

8. Accessory according to any of claims 1 to 7, **characterised in that** it comprises at least one transverse folding line.

9. Accessory according to any of claims 1 to 8, **characterised in that** it comprises at least one transverse cutting or breaking line.

10. Accessory according to any of claims 1 to 9, **characterised in that** said adhesive material is covered with a protective film before using said accessory.

11. Accessory according to any of claims 1 to 10, **characterised in that** said adhesive material (103; 103'; 103"; 1003) is an adhesive film which is applied to said first zone (102A; 102'A; 102"A; 1002A).

12. Accessory according to any of claims 1 to 10, **characterised in that** said adhesive material is a series of adhesive points distributed over said first zone.

13. Accessory according to any of claims 1 to 10, **characterised in that** said adhesive material is a self-adhesive tape.
